# EUROPEAN PATENT SPECIFICATION

(11) **EP 0 409 340 B1**
(45) Date of publication and mention of the grant of the patent: **02.03.1994**
(21) Application number: 90201924.9
(22) Date of filing: 13.07.1990
(51) Int. Cl.: B60J 7/10, B60J 7/06

(54) **Device for rolling up sheeting, particularly for a sheeting wall of a goods vehicle**
Aufrollvorrichtung von Planen, insbesondere für Lastkraftwagen mit einer Andeckplane
Dispositif pour enrouler des bâches, notamment pour véhicules utilitaires bâchés

(30) Priority: 18.07.1989 NL 8901857
(43) Date of publication of application: 23.01.1991
(73) Proprietor: ALBERS ALLIGATOR PROJECTEN B.V., NL-6702 DK Wageningen (NL)
(72) Inventor: Albers, Hendrikus Johannes Maria, NL-6706 JL Wageningen (NL)
(74) Representative: Hoijtink, Reinoud

(56) References cited:
- WO-A-84/03667
- WO-A-89/00513
- US-A- 2 510 307
- US-A- 2 967 734
- US-A- 4 691 957

## Description

The invention relates to a device for rolling up sheeting, particularly for a sheeting wall of a goods vehicle, a rotatable roll situated along the wall of a goods vehicle for rolling up the sheeting, drive means for rotating and bringing about a translating movement of the roll and means for guiding a translating movement of the roll. Such a device is known from WO-A-84/03667.

The loading space of goods vehicles is often closed off, namely at the sides, by sheeting. In order to gain access to the loading space the sheeting, which is usually fastened to the underside of the goods vehicle with rope or cable, is unfastened. The sheeting is then pulled or folded back in upward direction. When the loading space is closed the sheeting is dropped down and re-fastened.

These operations require much time, while there is moreover the drawback that in the opened position the sheeting is in loosely suspended position, which results in problems, particularly in strong winds.

It is the object of the invention to provide means which enable rapid opening and closing of a sheeting wall of a goods vehicle.

It is a further object of the invention to keep the width of the vehicle as small as possible.

This is achieved according to the invention by means for displacing the roll between a position outside the plane and a position approximately in the plane of the wall.

According to the invention it becomes possible to rapidly open and close the sheeting wall of a goods vehicle because the sheeting is rolled up on the roll, while there is further provided that in the closed position the roll remains within the plane of the loading space of the goods vehicle, which is necessary with regard to traffic safety.

The assembly of means for rotating the roll and for bringing about a translating movement of the roll is preferably arranged in a vertically running holder.

The means for displacing the roll between a position outside the plane and a position approximately in the plane of the wall are formed by a guide mechanism connected to the holder and the goods vehicle.

The drive means for causing the roll to rotate and the means for bringing about a translating movement of the roll are formed by a double reel coupled to the roll, a cable trained about a drive shaft and co-acting with one part of the reel and a tension cable under bias co-acting with the other part of the reel.

According to another embodiment the drive means for rotating the roll are formed by a gear rack placed along the wall and a pinion connected to the roll and the means for bringing about a translating movement of the roll consist of a member driving the pinion in vertical direction.

In this manner, by performing a translating movement of the roll, the roll is also rotated. The driving member can for instance be formed by a cable rollable onto a reel. Another possibility is that the driving member is formed by a screwed rod. The sheeting can be rolled up using a handle which can be manually operated.

In order to provide compensation for the changing of the peripheral distance of the roll because the sheeting is wound up there, the roll preferably stands under bias in the rotational direction. Compensation is herewith provided for the fact that the rotational speed of the roll is constant while the peripheral distance is continually changing. Locking means are preferably arranged in order to fix the roll in the plane of the wall in the non-active position. In this manner a safe and operationally reliable locking of the roll is obtained in the non-operational position.

When a solution is opted for that consists of arranging the roll at half-height for rolling up the sheeting, the sheeting can consist of one whole, wherein the roll then consists of semi-round elements and wherein the sheeting is clamped in between these elements. The roll can be coupled to a double reel wherein the drive means then consist of cables rolling up on the reel. One of the cables can therein be placed under bias.

The invention is further elucidated with reference to drawings of embodiments.

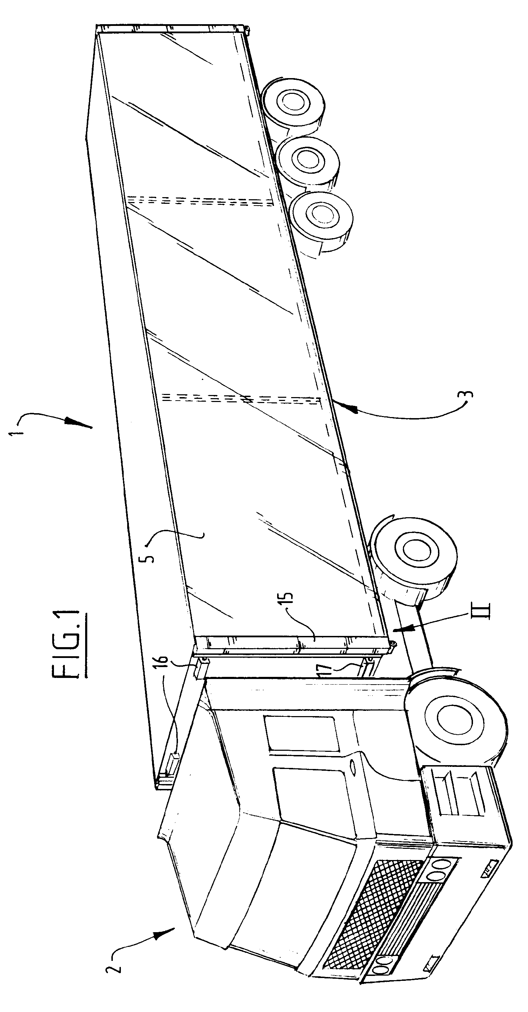

Fig. 1 shows a perspective view of a goods vehicle provided with the device according to the invention;
fig. 2 shows a perspective detail view along the arrow II in fig. 1;
fig. 3 is a view similar to fig. 2 of another embodiment; and
fig. 4 shows a second variant of the embodiment.

The goods vehicle 1 consists in this embodiment of a tractive unit 2 and a loading platform in the form of a trailer 3. Other types of goods vehicles, in which the loading space is closed off by sheeting walls, are of course also possible.

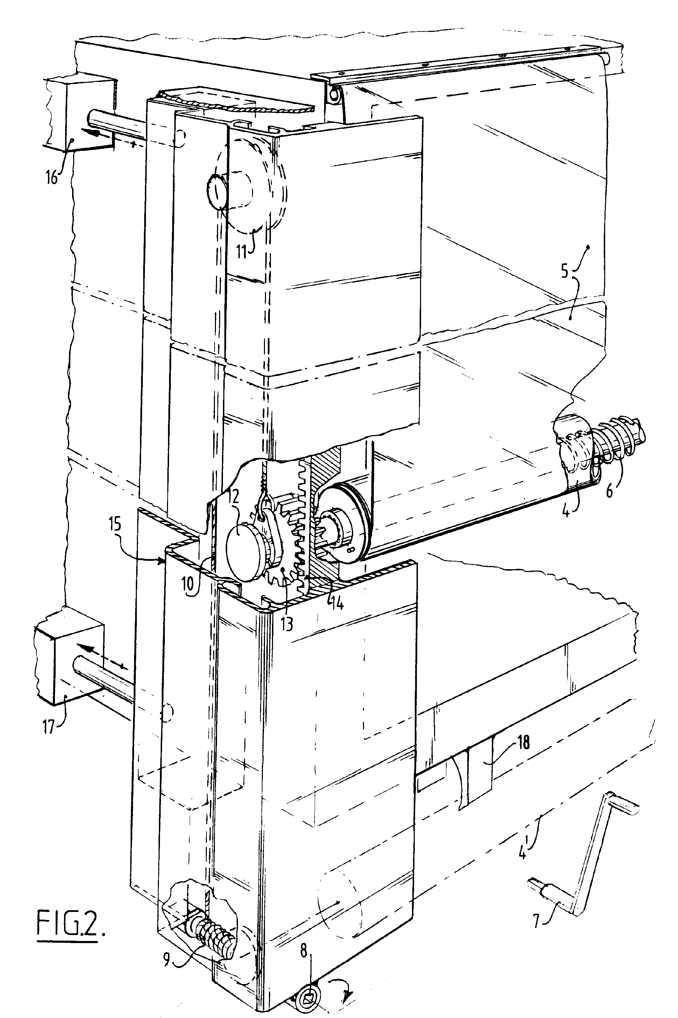

The device according to the invention consists of a roll 4 onto which can be wound a sheeting 5. Situated in the roll 4 is a spring 6 which provides compensation for the fact that during constant rotation the roll has a continually changing peripheral distance because the sheeting 5 is being wound thereon. The roll 4 is driven in its movement using a handle 7 which can be inserted into a corresponding opening 8, which opening forms part of a rotatably mounted shaft 9. The cable 10 is windable around the shaft 9. The cable 10 is coupled over a return pulley to a shaft end part 12 of the roll 4. Also positioned on the shaft end part 12 is a tooth pinion 13 which co-acts with a gear rack 14 disposed in stationary position in vertical direction. During pulling up of the cable 10 the roll 6 performs a translating movement as well as a rotating movement because the pinion 13 is in rolling engagement with the gear rack 14. The above described components are arranged in a holder 15 consisting of vertically disposed profile pieces. The whole as described in the foregoing is movable with the holder 15 perpendicular to the plane of the wall sheeting between a position as drawn in fig. 2 and an inwardly oriented position in which the roll is fixed under the loading space. The means for carrying out this movement consist of two guidings 16 and 17. The guiding rods are connected to the holder 15 and the components accommodated therein. The roll 4 can be locked into its position underneath the loading space in that it engages behind the approximately U-shaped holder 18.

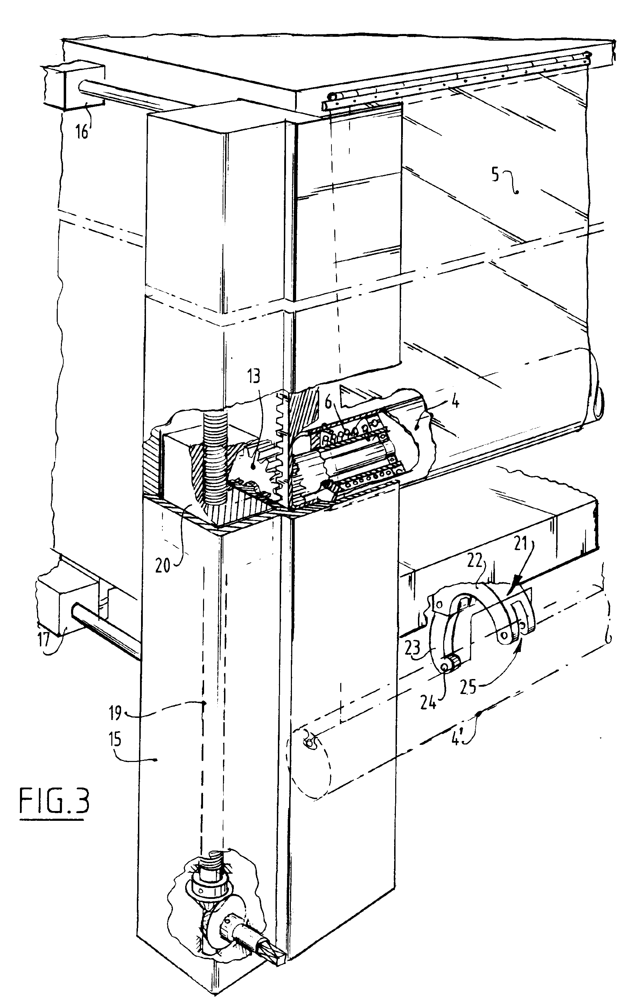

Instead of a drive element in the form of a cable a screwed rod 19 is preferred in the embodiment of fig. 3 which co-operates with a nut 20 that is mounted via the tooth pinion 13 and the roll 4 coupled thereto.

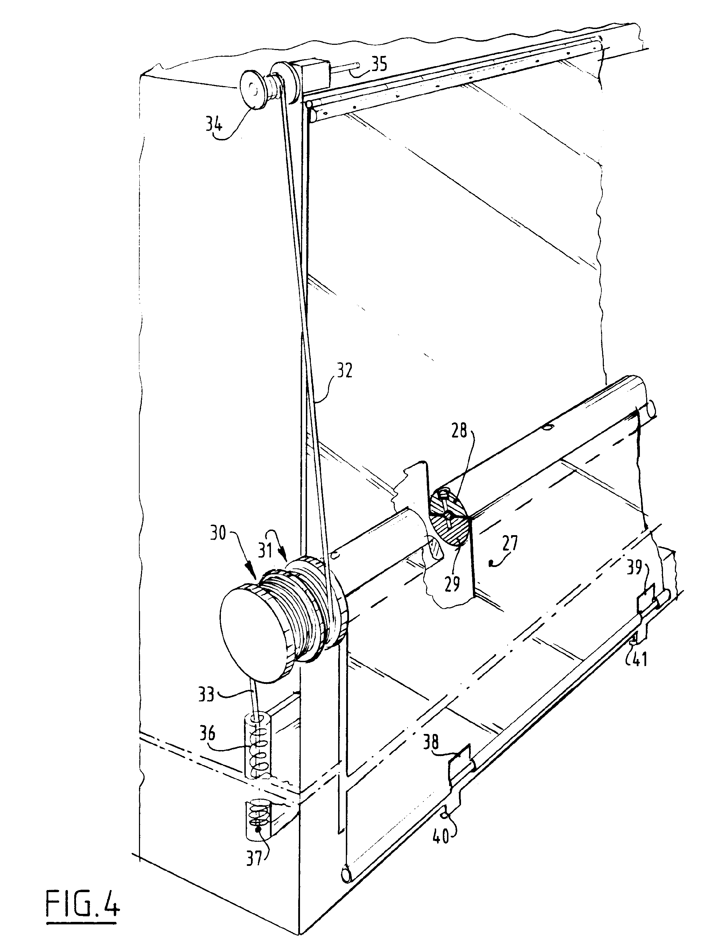

In addition, instead of the locking member 18 a locking member 21 is preferred which consists of two mutually pivotable brackets 22 and 23. The outer end 24 of the bracket 23 therein co-acts with a complementary slot 25. In the embodiment of fig. 4 the roll, which consists of two mutually adjoining semi-circular elements 28, 29, is fixed clamping at half-height to the sheeting wall running from top to bottom. Connected to the roll is a double reel 30, 31. Driving takes place via two cables 32, 33 whereof the driven cable 32 is trained around a reel 34 which is connected to a drive shaft 35. The other cable 33 is fixed with its end to point 37 via a spring 36 providing a bias. The sheeting portion 27 has on the underside cut-away portions 38, 39 which can co-act with locking members 40, 41 beneath the loading space.

## Claims

1. Device for rolling up sheeting, particularly for a sheeting wall of a goods vehicle, comprising a rotatable roll situated along the wall of a goods vehicle for rolling up the sheeting, drive means for rotating and bringing about a translating movement of the roll and means for guiding said translating movement of the roll **characterized by** means for displacing the roll between a position outside the plane and a position approximately in the plane of the wall.

2. Device as claimed in claim 1, **characterized in that** the assembly of means for rotating the roll and for bringing about a translating movement of the roll and the guiding means is received in a vertically running holder.

3. Device as claimed in claim 2, **characterized in that** the means for displacing the roll between a position outside the plane and a position approximately in the plane of the wall are formed by a guide mechanism connected to the holder and the goods vehicle.

4. Device as claimed in claims 1-3, **characterized in** **that** the drive means for causing the roll to rotate and for bringing about a translating movement of the roll are formed by a double reel coupled to the roll, a cable trained about a drive shaft and co-acting with one part of the reel and a tension cable under bias co-acting with the other part of the reel.

5. Device as claimed in claim 4, **characterized in that** the roll consists of two semi-circular elements and the sheeting of one whole that is clamped at approximately half-height between the elements.

6. Device as claimed in claims 1-5, **characterized in** **that** the roll stands under bias in rotational direction.

7. Device as claimed in claim 1, **characterized in that** the drive means for rotating the roll are formed by a gear rack placed along the wall and a pinion connected to the roll and that the means for guiding a translating movement of the roll consist of a member driving the pinion in vertical direction.

8. Device as claimed in claim 7, **characterised in that** the driving member is formed by a cable rollable onto a reel.

9. Device as claimed in claims 7-8, **characterized in** **that** the driving member is operated using a handle.

10. Device as claimed in claim 7, **characterized in that** the roll co-acts with locking means for fixing the roll in the position approximately in the plane of the wall.

## Patentansprüche

1. Vorrichtung zum Aufrollen einer Plane, insbesondere für eine Planenwand eines Lastkraftwagens, mit einer entlang der Wand eines Lastkraftwagens angeordneten drehbaren Rolle zum Aufrollen der Plane, Antriebsmitteln zum Drehen und Bewirken einer Translationsbewegung der Rolle und Mitteln zum Führen der Translationsbewegung der Rolle, gekennzeichnet durch,
Mittel zum Versetzen der Rolle zwischen einer Position außerhalb der Ebene und einer Position in etwa in der Ebene der Wand.

2. Vorrichtung nach Anspruch 1, dadurch gekennzeichnet, daß
die Anordnung von Mitteln zum Drehen der Rolle und zum Bewirken einer Translationsbewegung der Rolle und die Führungsmittel in einem vertikal verlaufenden Halter aufgenommen sind.

3. Vorrichtung nach Anspruch 2, dadurch gekennzeichnet, daß
die Mittel zum Verbringen der Rolle zwischen einer Position außerhalb der Ebene und einer Position in etwa in der Ebene der Wand durch einen Führungsmechanismus gebildet sind, der mit dem Halter und dem Lastkraftwagen verbunden ist.

4. Vorrichtung nach den Ansprüchen 1 bis 3, dadurch gekennzeichnet, daß
die Antriebsvorrichtung zum Bewirken des Drehens der Rolle und zum Bewirken einer Translationsbewegung der Rolle durch eine mit der Rolle verbundene doppelte Spindel, ein um eine Antriebswelle geführtes Kabel, das mit einem Teil der Spindel zusammenwirkt, und ein Spannungskabel gebildet wird, das mit dem anderen Teil der Spindel zusammenwirkt.

5. Vorrichtung nach Anspruch 4, dadurch gekennzeichnet, daß
die Rolle aus zwei halbkreisförmigen Elementen besteht, und die Plane aus einem Stück besteht, auf dem in etwa in halber Höhe die Elemente geklemmt sind.

6. Vorrichtung nach den Ansprüchen 1 bis 5, dadurch gekennzeichnet, daß
die Rolle in Rotationsrichtung unter Vorspannung steht.

7. Vorrichtung nach Anspruch 1, dadurch gekennzeichnet, daß
die Antriebsmittel zum Drehen der Rolle durch eine Zahnstange gebildet sind, die entlang der Wand vorgesehen ist, sowie ein mit der Rolle verbundenes Zahnrad, und
die Mittel zum Führen einer Translationsbewegung der Rolle aus einem das Zahnrad in vertikaler Richtung antreibenden Element besteht.

8. Vorrichtung nach Anspruch 1, dadurch gekennzeichnet, daß
das Antriebselement durch ein auf einer Spindel laufendes Kabel gebildet ist.

9. Vorrichtung nach einem der Ansprüche 7 bis 8, dadurch gekennzeichnet, daß
die Antriebsvorrichtung unter Benutzung eines Griffes betrieben wird.

10. Vorrichtung nach Anspruch 1, dadurch gekennzeichnet, daß
die Rolle mit einer Sperrvorrichtung zusammenwirkt, zum Fixieren der Rolle in der Position in etwa in der Ebene der Wand.

## Revendications

1. Appareil d'enroulement d'une bâche, notamment destiné à une paroi formée d'une bâche d'un véhicule de transport de marchandises, comprenant un rouleau rotatif placé le long de la paroi du véhicule de transport de marchandises et destiné à enrouler la bâche vers le haut, un dispositif d'entraînement destiné à faire tourner le rouleau et à lui donner un mouvement de translation, et un dispositif de guidage du mouvement de translation du rouleau, caractérisé par un dispositif destiné à déplacer le rouleau entre une position qui est en dehors du plan de la paroi et une position qui se trouve approximativement dans ce plan.

2. Appareil selon la revendication 1, caractérisé en ce que l'ensemble des dispositifs d'entraînement en rotation du rouleau et de déplacement en translation du rouleau et du dispositif de guidage est logé dans un support disposé verticalement.

3. Appareil selon la revendication 2, caractérisé en ce que le dispositif de déplacement du rouleau entre une position qui se trouve à l'extérieur du plan et une position qui se trouve approximativement dans le plan de la paroi est formé par un mécanisme de guidage raccordé au support et au véhicule de transport de marchandises.

4. Appareil selon les revendications 1 à 3, caractérisé en ce que le dispositif d'entraînement destiné à provoquer l'entraînement en rotation du rouleau et un déplacement en translation du rouleau est formé par une bobine double couplée au rouleau, un câble passant autour d'un arbre d'entraînement et coopérant avec une première partie de la bobine et un câble de tension soumis à une force de rappel coopérant avec l'autre partie de la bobine.

5. Appareil selon la revendication 4, caractérisé en ce que le rouleau comprend deux éléments semi-circulaires, et la bâche dans son ensemble qui est serrée à mi-hauteur environ entre les éléments.

6. Appareil selon les revendications 1 à 5, caractérisé en ce que le rouleau est soumis à une force de rappel dans un sens de rotation.

7. Appareil selon la revendication 1, caractérisé en ce que le dispositif d'entraînement en rotation du rouleau est formé par une crémaillère placée le long de la paroi et un pignon raccordé au rouleau, et le dispositif de guidage du mouvement de translation du rouleau comprend un organe qui entraîne le pignon en direction verticale.

8. Appareil selon la revendication 7, caractérisé en ce que l'organe d'entraînement est formé par un câble qui peut rouler sur une bobine.

9. Appareil selon les revendications 7 et 8, caractérisé en ce que l'organe d'entraînement est manoeuvré à l'aide d'une manivelle.

10. Appareil selon la revendication 7, caractérisé en ce que le rouleau coopère avec un dispositif de blocage destiné à fixer le rouleau en position approximativement dans le plan de la paroi.
